(19) Europäisches Patentamt
European Patent Office
Office européen des brevets

(11) **EP 4 482 049 A1**

(12) **EUROPEAN PATENT APPLICATION**
published in accordance with Art. 153(4) EPC

(43) Date of publication:
**25.12.2024 Bulletin 2024/52**

(21) Application number: **23755784.8**

(22) Date of filing: **14.02.2023**

(51) International Patent Classification (IPC):
**H04B 7/0456** (2017.01)

(52) Cooperative Patent Classification (CPC):
**H04B 7/0456; Y02D 30/70**

(86) International application number:
**PCT/CN2023/075999**

(87) International publication number:
**WO 2023/155782 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.02.2022 CN 202210146653**

(71) Applicant: **Beijing Unisoc Communications Technology Co., Ltd**
**Beijing 100083 (CN)**

(72) Inventor: **MA, Dawei**
**Beijing 100083 (CN)**

(74) Representative: **Mewburn Ellis LLP**
**Aurora Building**
**Counterslip**
**Bristol BS1 6BX (GB)**

(54) **METHOD FOR DETERMINING UPLINK PRECODING MATRIX, AND COMMUNICATION APPARATUS**

(57) A method for uplink precoding matrix determination and a communication apparatus are disclosed in the disclosure. The method includes the following. First indication information and second indication information are received. The first indication information is used to determine a first transmission rank indicator (TRI) and a first precoding matrix indicator, and the second indication information is used to determine a second TRI and a second precoding matrix indicator. A first precoding matrix is determined according to the first TRI and the first precoding matrix indicator, and a second precoding matrix is determined according to the second TRI and the second precoding matrix indicator. Both the first precoding matrix and the second precoding matrix correspond to 4 antenna ports. An uplink precoding matrix is determined according to the first precoding matrix and the second precoding matrix. The uplink precoding matrix corresponds to 8 antenna ports. Uplink data is transmitted according to the uplink precoding matrix. In the disclosure, an uplink precoding matrix corresponding to 8 antenna ports may be constructed, so as to realize uplink transmission using 8 antenna ports, and effectively improve an uplink transmission rate.

```
TERMINAL                          NETWORK
DEVICE                            DEVICE

     ◄── S201, FIRST INDICATION INFORMATION AND
         SECOND INDICATION INFORMATION

┌─────────────────────────────────────────┐
│ S202, DETERMINE A FIRST PRECODING MATRIX │
│ AND A SECOND PRECODING MATRIX            │
└─────────────────────────────────────────┘

┌─────────────────────────────────────────┐
│ S203, DETERMINE AN UPLINK PRECODING      │
│ MATRIX ACCORDING TO THE FIRST PRECODING  │
│ MATRIX AND THE SECOND PRECODING MATRIX   │
└─────────────────────────────────────────┘

     S204, UPLINK DATA ──►
```

FIG. 2

EP 4 482 049 A1

## Description

TECHNICAL FIELD

Embodiments of the disclosure relate to the field of communications, and in particular, to a method for uplink precoding matrix determination and a communication apparatus.

BACKGROUND

In communication systems, precoding techniques are commonly used. The precoding techniques are categorized into codebook-based precoding techniques and non-codebook-based precoding techniques. In the codebook-based precoding techniques, both a transmitting terminal and a receiving terminal are informed of the same quantized codebook set in advance, and a system selects a suitable codebook from the codebook set according to certain criteria and constructs a precoding matrix to precode data to be transmitted. An advantage of the precoding techniques is that the amount of information to be fed back is small, so that interference between receivers may be reduced and a capacity of a communication system may be increased.

With the development of mobile communications and the emergence of new services, requirements for uplink transmission rates are increasingly high, for example, real-time backhaul of high-definition video data is required in remote medicine, video surveillance, and other scenarios. However, the demand for uplink transmission rates cannot be fully met in an uplink precoding manner under the current standard. Therefore, how to optimize an uplink precoding procedure to improve an uplink transmission rate is still a problem to be solved.

SUMMARY

A method for uplink precoding matrix determination and a communication apparatus are provided in the disclosure, so that an uplink precoding matrix corresponding to 8 antenna ports may be constructed, thereby realizing uplink transmission using 8 antenna ports, and thus effectively improving an uplink transmission rate.

In a first aspect, a method for uplink precoding matrix determination is provided in the disclosure. The method includes the following. First indication information and second indication information are received. The first indication information is used to determine a first transmission rank indicator (TRI) and a first precoding matrix indicator, and the second indication information is used to determine a second TRI and a second precoding matrix indicator. A first precoding matrix is determined according to the first TRI and the first precoding matrix indicator, and a second precoding matrix is determined according to the second TRI and the second precoding matrix indicator. Both the first precoding matrix and the second precoding matrix correspond to 4 antenna ports. An uplink precoding matrix is determined according to the first precoding matrix and the second precoding matrix, where the uplink precoding matrix corresponds to 8 antenna ports. Uplink data is transmitted according to the uplink precoding matrix.

It may be seen that the uplink precoding matrix corresponding to 8 antenna ports may be constructed according to two uplink precoding matrices each corresponding to 4 antenna ports, so that an uplink transmission rate on uplink may be improved by means of joint transmission using 8 antenna ports.

In an implementation, the first TRI is the same as the second TRI, and the uplink precoding matrix is a block diagonal matrix formed according to the first precoding matrix and the second precoding matrix. In the case where two precoding matrices each corresponding to 4 antenna ports do not satisfy coherence, the two precoding matrices may be taken as block diagonal matrices of the uplink precoding matrix.

In an implementation, the method above further includes receiving third indication information. The third indication information is used to determine a co-phasing coefficient between the first precoding matrix and the second precoding matrix. The uplink precoding matrix may be determined according to the first precoding matrix and the second precoding matrix as follows. The uplink precoding matrix is determined according to the first precoding matrix, the second precoding matrix, and the co-phasing coefficient.

In the case where two precoding matrices each corresponding to 4 antenna ports satisfy coherence, a network device indicates a co-phasing coefficient between the two precoding matrices, thereby obtaining a relatively good antenna gain.

In an implementation, the co-phasing coefficient is a first co-phasing coefficient, and the uplink precoding matrix may be determined according to the first precoding matrix, the second precoding matrix, and the co-phasing coefficient as follows. The uplink precoding matrix is determined according to the first precoding matrix, the second precoding matrix, and the first co-phasing coefficient, in the case where the first TRI is less than or equal to 2 and the second TRI is less than or equal to 2.

In another implementation, the co-phasing coefficient includes a first co-phasing coefficient and a second co-phasing coefficient, and the uplink precoding matrix may be determined according to the first precoding matrix, the second precoding matrix, and the co-phasing coefficient as follows. A reference precoding matrix is determined according to the first precoding matrix, the second precoding matrix, the first co-phasing coefficient, and the second co-phasing coefficient, in the case where the first TRI is greater than 2 and the second TRI is greater than 2. The uplink precoding matrix is determined according to the reference precoding matrix.

In an implementation, the method further includes receiving fourth indication information. The fourth indication information is used to determine a layer index. The uplink precoding matrix may be determined according to the reference precoding matrix as follows. The uplink precoding matrix is determined according to the reference precoding matrix and the layer index.

It may be seen that different uplink precoding matrices each corresponding to 8 antenna ports may be constructed using two uplink precoding matrices each corresponding to 4 antenna ports, and a suitable uplink precoding matrix corresponding to 8 antenna ports may be selected with reference to actual application scenarios and information such as a channel state, thereby improving an uplink transmission rate.

In a second aspect, a communication apparatus is provided in the disclosure. The communication apparatus includes a communication unit and a processing unit. The communication unit is configured to receive first indication information and second indication information. The first indication information is used to determine a first TRI and a first precoding matrix indicator, and the second indication information is used to determine a second TRI and a second precoding matrix indicator. The processing unit is configured to: determine a first precoding matrix according to the first TRI and the first precoding matrix indicator, and determine a second precoding matrix according to the second TRI and the second precoding matrix indicator, where both the first precoding matrix and the second precoding matrix correspond to 4 antenna ports; and determine an uplink precoding matrix according to the first precoding matrix and the second precoding matrix, where the uplink precoding matrix corresponds to 8 antenna ports. The communication unit is further configured to transmit uplink data according to the uplink precoding matrix.

In a third aspect, a communication apparatus is provided in the disclosure. The communication apparatus includes a processor, a memory, and a transceiver. The transceiver is configured to receive or transmit a signal. The memory is configured to store program codes. The processor is configured to invoke the program codes from the memory to perform the method in the first aspect or in any one of possible implementations of the first aspect.

In a fourth aspect, a chip is provided in the disclosure. The chip is configured to: receive first indication information and second indication information, where the first indication information is used to determine a first TRI and a first precoding matrix indicator, and the second indication information is used to determine a second TRI and a second precoding matrix indicator; determine a first precoding matrix according to the first TRI and the first precoding matrix indicator, and determine a second precoding matrix according to the second TRI and the second precoding matrix indicator, where both the first precoding matrix and the second precoding matrix correspond to 4 antenna ports; determine an uplink precoding matrix according to the first precoding matrix and the second precoding matrix, where the uplink precoding matrix corresponds to 8 antenna ports; and transmit uplink data according to the uplink precoding matrix.

In a fifth aspect, a module device is provided in the disclosure. The module device includes a power module, a storage module, a communication module, and a chip module. The power module is configured to power the module device. The storage module is configured to store data and instructions. The communication module is configured to perform internal communication in the module device or configured to perform communication between the module device and an external device. The chip module is configured to: receive first indication information and second indication information via the communication module, where the first indication information is used to determine a first TRI and a first precoding matrix indicator, and the second indication information is used to determine a second TRI and a second precoding matrix indicator; determine a first precoding matrix according to the first TRI and the first precoding matrix indicator, and determine a second precoding matrix according to the second TRI and the second precoding matrix indicator, where both the first precoding matrix and the second precoding matrix correspond to 4 antenna ports; determine an uplink precoding matrix according to the first precoding matrix and the second precoding matrix, where the uplink precoding matrix corresponds to 8 antenna ports; and transmit uplink data via the communication module according to the uplink precoding matrix.

In a sixth aspect, a computer-readable storage medium is provided in the disclosure. The computer-readable storage medium is configured to store computer-readable instructions which, when running on a communication apparatus, enable the communication apparatus to perform the method in the first aspect or in any one of possible implementations of the first aspect.

In a seventh aspect, a computer program or computer program product is provided in the disclosure. The computer program or computer program product includes codes or instructions which, when running on a computer, enable the computer to perform the method in the first aspect or in any one of possible implementations of the first aspect.

BRIEF DESCRIPTION OF THE DRAWINGS

In order to describe technical solutions in the disclosure or the related art more clearly, the following will give a brief introduction to accompanying drawings required for describing embodiments or the related art. Apparently, the accompanying drawings hereinafter described are merely some embodiments of the disclosure. According to these drawings, those of ordinary skill in the art can also obtain other drawings without creative effort.

FIG. 1 is a schematic diagram illustrating a scenario of a communication system provided in embodiments of the disclosure.

FIG. 2 is a schematic flow chart illustrating a method for uplink precoding matrix determination provided in embodiments of the disclosure.

FIG. 3 is another schematic flow chart illustrating a method for uplink precoding matrix determination provided in embodiments of the disclosure.

FIG. 4 is a schematic structural diagram illustrating a communication apparatus provided in embodiments of the disclosure.

FIG. 5 is a schematic structural diagram illustrating a communication apparatus provided in embodiments of the disclosure.

FIG. 6 is a schematic structural diagram illustrating a module device provided in embodiments of the disclosure.

DETAILED DESCRIPTION

The terms used in the following embodiments of the disclosure is merely for the purpose of describing particular embodiments and is not intended to be limitation to the disclosure. As used in the description and the appended claims of the disclosure, the singular forms "a", "an", "a kind of", "the", "the above", "such", and "this one" are intended to include plural forms as well, unless the context clearly indicates otherwise. It may also be understood that the term "and/or" as used herein refers to and includes any or all possible combinations of one or more of the listed items.

It may be noted that the terms "first", "second", "third", and the like in the specification, claims, and above accompanying drawings of the disclosure are used to distinguish similar objects, and are not necessarily used to describe a particular sequence or order. It may be understood that, the terms thus used may be interchangeable where appropriate, so that the embodiments of the disclosure described herein, for example, may be implemented in a sequence other than those illustrated or described herein. In addition, the terms "include", "comprise", and "have" as well as variations thereof are intended to cover non-exclusive inclusion. For example, a process, method, system, product, or server including a series of steps or units is not limited to the clearly listed steps or units, and instead, it may optionally include other operations or units that are not listed or other operations or units inherent to the process, method, product, or device.

The embodiments of the disclosure may be applied to a 5th generation (5G) system, and may also be referred to as a new radio (NR) system; or may be applied to a 6th generation (6G) system, or a 7th generation (7G) system, or other future communication systems; or may be used in a device to device (D2D) system, a machine to machine (M2M) system, a long term evolution (LTE) system, and the like.

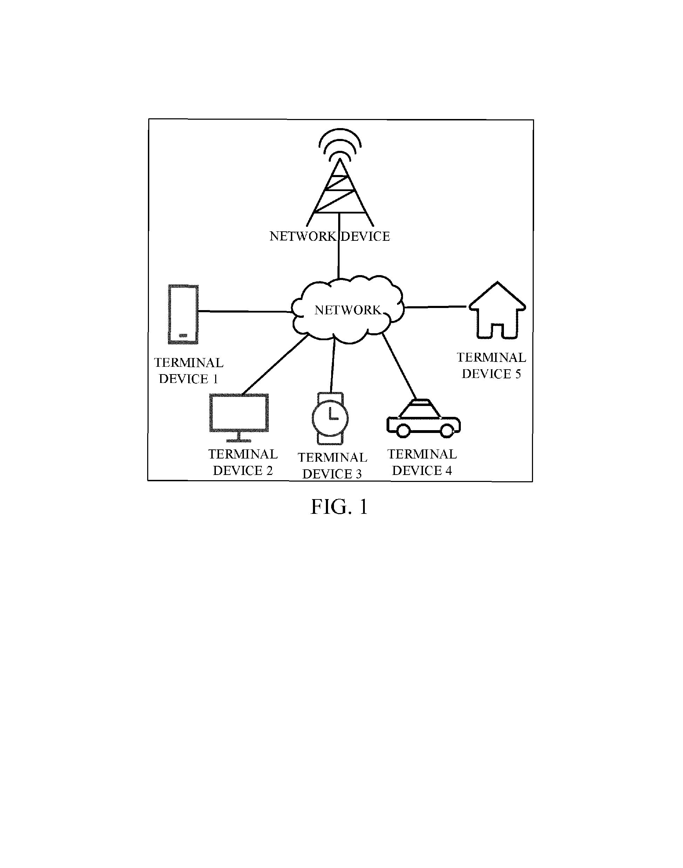

As an example but without limitation, the method provided in embodiments of the disclosure may be applied to a communications system illustrated in FIG. 1. FIG. 1 is a schematic diagram illustrating a scenario of a communication system. The communication system may include, but is not limited to, one or more network devices and one or more terminal devices. Exemplarily, FIG. 1 illustrates a network device and five terminal devices. It may be noted that, the number and form of devices illustrated in FIG. 1 are used as examples and do not limit embodiments of the disclosure.

In embodiment of the disclosure, the terminal device may include, but is not limited to, a user equipment (UE), an access terminal, a subscriber unit, a subscriber station, a mobile station, a remote station, a remote terminal, a mobile device, a user terminal, a user agent, or a user apparatus. For another example, the terminal device may be a mobile phone, a pad, a smart watch, a computer with a wireless transceiver function, a virtual reality terminal device, an augmented reality terminal device, a wireless terminal in industrial control, a wireless terminal in self driving, a wireless terminal in remote medicine, a wireless terminal in a smart grid, a wireless terminal in transportation security, a wireless terminal in a smart city, a wireless terminal in a smart home, a wireless terminal in an internet of vehicles, and the like.

In embodiments of the disclosure, the network device may include, but is not limited to, an evolved node B (eNB), a radio network controller (RNC), a Node B (NB), a base station controller (BSC), a base transceiver station (BTS), a home network device (e.g., a home evolved Node B, or home Node B (HNB)), a baseband unit (BBU), an access point (AP) in a wireless fidelity (WIFI) system, a wireless relay node, a wireless backhaul node, a transmission and reception point (TRP), a transmission point (TP), and the like. The network device may also be a device used in a 5G, 6G, or even 7G system, such as a next generation Node B (gNB) in an NR system, or a transmission point (e.g., a TRP or TP).

In embodiments of the disclosure, the network device may transmit first indication information and second indication information to the terminal device. According to the first indication information and the second indication information, the terminal device may determine two precoding matrices each corresponding to 4 antenna ports, i.e., a first precoding matrix and a second precoding matrix. According to the first precoding matrix and the second precoding matrix, the terminal device may determine an uplink precoding matrix corresponding to 8 antenna ports. The terminal device precodes uplink data according to the uplink precoding matrix and transmits the precoded uplink data to the network device. As such, an uplink transmission rate may be effectively improved.

First, some terms involved in embodiments of the disclosure are explained to facilitate understanding of those skilled in the art.

1. Codebook-based precoding

Codebook-based precoding is a precoding scheme used to reduce feedback overhead in a communication system. The codebook-based precoding scheme is usually categorized into two schemes: downlink precoding and uplink precoding. In particular, during uplink transmission, the network device may indicate to the terminal device a precoding matrix for physical uplink shared channel (PUSCH) transmission, via a transmission precoding matrix indicator (TPMI) and a transmission rank indicator (TRI). The network device may indicate a TRI and a TPMI via downlink control information (DCI). The terminal device may determine a precoding matrix according to a TPMI and a TRI, encode a PUSCH according to the precoding matrix, and transmit the encoded PUSCH.

2. Antenna port

An antenna port represents a port of an antenna module that transmits or receives a signal. In order to greatly increase a channel capacity, multiple antennas are used at both a transmitting terminal and a receiving terminal, and thus an antenna system having multiple channels is formed between the transmitting terminal and the receiving terminal. As applied to the disclosure, antenna ports refer to logical ports for transmission and do not have a defined one-to-one correspondence with physical antennas. Currently, uplink transmission using 2 antenna ports and uplink transmission using 4 antenna ports are supported in an uplink precoding scheme, e.g., a PUSCH is encoded and transmitted through an uplink precoding codebook corresponding to 2 antenna ports or an uplink precoding codebook corresponding to 4 antenna ports.

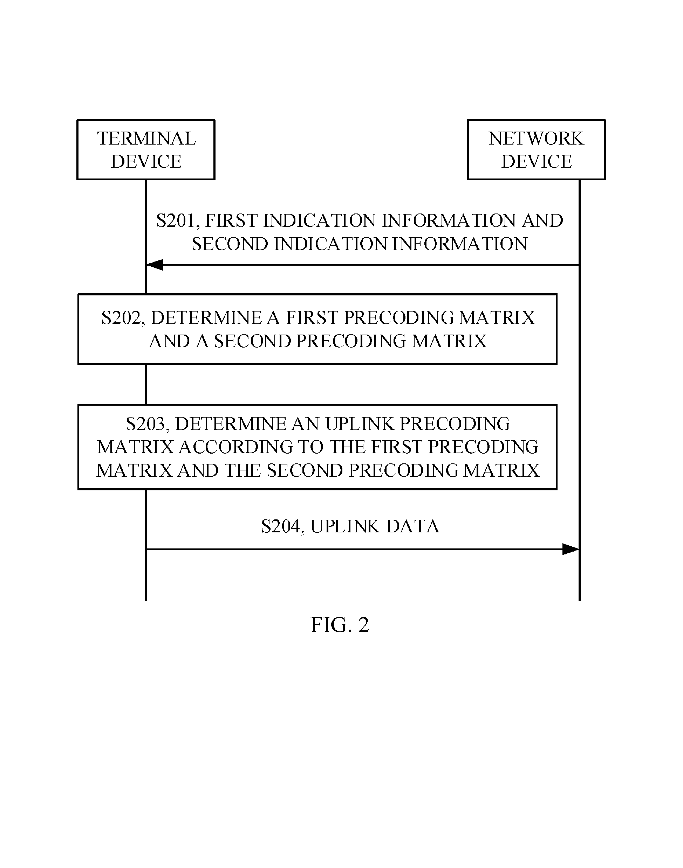

According to a communication system as illustrated in FIG. 1, a method for uplink precoding matrix determination is provided in embodiments of the disclosure. Refer to FIG. 2, which is a schematic flow chart illustrating a method for uplink precoding matrix determination provided in embodiments of the disclosure. As illustrated in FIG. 2, the method for uplink precoding matrix determination includes, but is not limited to, the following.

At S201, a network device transmits first indication information and second indication information to a terminal device. Accordingly, the terminal device receives the first indication information and the second indication information from the network device.

The first indication information is used to determine a first TRI and a first precoding matrix indicator, and the second indication information is used to determine a second TRI and a second precoding matrix indicator. Optionally, the first indication information is used to determine the first TRI and the first precoding matrix indicator, and the first indication information and the second indication information are used together to determine the second TRI and the second precoding matrix indicator.

In an implementation, the first indication information and the second indication information may be two separate indication information, and one indication information is used to determine one TRI and one precoding matrix indicator. In another implementation, the first indication information and the second indication information may be one indication information, and the indication information is used to determine the first TRI and the first precoding matrix indicator and further used to determine the second TRI and the second precoding matrix indicator. In yet another implementation, one of the first indication information and the second indication information is used to determine TRIs, and the other is used to determine the first precoding matrix indicator and the second precoding matrix indicator. The expression "be used to determine" may also be described as "indicate(s)".

The first TRI or the second TRI may be 1, 2, 3, or 4. The first TRI may be the same as the second TRI, e.g., both the first TRI and the second TRI are 2; or the first TRI may be different from the second TRI, e.g., the first TRI is 2 and the second TRI is 4. The first precoding matrix indicator or the second precoding matrix indicator may be a TPMI, or other identities indicating a precoding matrix.

Optionally, the network device may determine the first TRI, the second TRI, the first precoding matrix indicator, and the second precoding matrix indicator according to channel state information (CSI) reported by the terminal device.

The network device may transmit the first indication information and the second indication information to the terminal device via DCI, i.e., the first indication information and the second indication information are carried in the DCI. The first indication information and the second indication information may be carried in the same DCI, or carried in different DCI, e.g., one indication information is carried in one DCI.

At S202, the terminal device determines a first precoding matrix according to the first TRI and the first precoding matrix indicator, and determines a second precoding matrix according to the second TRI and the second precoding matrix indicator. Both the first precoding matrix and the second precoding matrix correspond to 4 antenna ports.

For 2 antenna ports and 4 antenna ports, the network device and the terminal device may store at least one identical precoding codebook. A precoding codebook constructed under a TRI typically includes multiple precoding matrices, and one TPMI corresponds to one precoding matrix. Generally, the terminal device transmits a sounding reference signal (SRS) to the network device. The network device determines from the precoding codebook, according to the SRS from the terminal device, a precoding matrix that is to be used for uplink transmission, and transmits to the terminal device a TPMI indicating the precoding matrix. In the case where the terminal device receives the TPMI, the terminal device may determine a corresponding precoding matrix according to the TRI and the TPMI, and perform uplink transmission using the precoding matrix. In the case where the TRI is determined, the terminal device may determine a precoding matrix according to a TPMI.

Different precoding matrices or different precoding codebooks may be constructed for different numbers of antenna ports, different waveforms, and different TRIs. Exemplarily, for a cyclic prefix-orthogonal frequency division multiplexing (CP-OFDM) waveform, an uplink precoding codebook for 2-layer transmission using 4 antenna ports may be illustrated in Table 1. In Table 1, precoding matrices in the precoding codebook are ordered from left to right in increasing order of TPMIs. For example, in Table 1, matrices illustrated in the second row are uplink precoding matrices corresponding to TPMI=0, TPMI=1, TMPI=2, and TPMI=3, respectively. In Table 1, each matrix is a matrix with four rows and two columns, where the four rows represent 4 antenna ports and the two columns represent that a TRI is 2.

Table 1 uplink precoding codebook for 2-layer transmission using 4 antenna ports

| TPMI | uplink precoding matrix | | | |
|---|---|---|---|---|
| 0-3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4-7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8-11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12-15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16-19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |
| 20-21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | - | - |

For example, assuming that both the first TRI and the second TRI are 2, the first precoding matrix indicator is TPMI 7, and the second precoding matrix indicator is TPMI 12, the following first precoding matrix $B_1$ and second precoding matrix $B_2$ may be obtained according to Table 1:

$$B_1 = \frac{1}{2} \begin{bmatrix} 1 & 0 \\ 0 & 1 \\ 1 & 0 \\ 0 & j \end{bmatrix}, B_2 = \frac{1}{2} \begin{bmatrix} 1 & 0 \\ 0 & 1 \\ j & 0 \\ 0 & 1 \end{bmatrix}.$$

For another example, assuming that both the first TRI and the second TRI are 2, the first precoding matrix indicator is TPMI 2, and the second precoding matrix indicator is TPMI 5, the following first precoding matrix $B_1$ and second precoding matrix $B_2$ may be obtained according to Table 1:

$$B_1 = \frac{1}{2} \begin{bmatrix} 1 & 0 \\ 0 & 0 \\ 0 & 0 \\ 0 & 1 \end{bmatrix}, B_2 = \frac{1}{2} \begin{bmatrix} 0 & 0 \\ 0 & 0 \\ 1 & 0 \\ 0 & 1 \end{bmatrix}.$$

In an implementation, two precoding codebooks each corresponding to 2 antenna ports may be combined to form a precoding codebook corresponding to 4 antenna ports, and thus the terminal device may determine four precoding matrices in the case where the terminal device receives four TPMIs from the network device, and accordingly determine an uplink precoding matrix corresponding to 8 antenna ports by using the four precoding matrices each corresponding to 2 antenna ports.

At S203, the terminal device determines an uplink precoding matrix according to the first precoding matrix and the second precoding matrix. The uplink precoding matrix corresponds to 8 antenna ports.

The terminal device may determine the uplink precoding matrix according to the first precoding matrix and the second precoding matrix in one of the following implementations.

In a first implementation, the first TRI is the same as the second TRI, and the uplink precoding matrix is a block diagonal matrix formed according to the first precoding matrix and the second precoding matrix, i.e., block diagonal matrices of the uplink precoding matrix are the first precoding matrix and the second precoding matrix. In this manner, the total number of channel layers is the first TRI or the second TRI. In the case where the two precoding matrices each corresponding to 4 antenna ports do not satisfy coherence, the two precoding matrices may be taken as block diagonal matrices of the uplink precoding matrix.

Assuming that the first precoding matrix is represented as $B_1$, the second precoding matrix is represented as $B_2$, and the uplink precoding matrix corresponding to 8 antenna ports is represented as $W$, a block diagonal matrix determined according to the first precoding matrix and the second precoding matrix, i.e., the uplink precoding matrix, may be expressed as:

$$W = \begin{bmatrix} B_1 & 0 \\ 0 & B_2 \end{bmatrix}.$$

Exemplarily, assuming that both the first TRI and the second TRI are 2, the first precoding matrix indicator is TPMI 2, and the second precoding matrix indicator is TPMI 5, according to the precoding codebook illustrated in Table 1, the uplink precoding matrix $W$ may satisfy:

$$W=\frac{1}{2}\begin{bmatrix} 1 & 0 & 0 & 0 \\ 0 & 0 & 0 & 0 \\ 0 & 0 & 0 & 0 \\ 0 & 1 & 0 & 0 \\ 0 & 0 & 0 & 0 \\ 0 & 0 & 0 & 0 \\ 0 & 0 & 1 & 0 \\ 0 & 0 & 0 & 1 \end{bmatrix}.$$

In a second implementation, the terminal device may determine the uplink precoding matrix according to the first precoding matrix, the second precoding matrix, and a co-phasing coefficient. The co-phasing coefficient may be determined via third indication information transmitted to the terminal device from the network device. The third indication information, the first indication information, and the second indication information may be carried in the same DCI or in different DCI. In the case where the third indication information, the first indication information, and the second indication information are carried in different DCI, there is no restriction on order in which the three indication information are transmitted. In the case where the two precoding matrices each corresponding to 4 antenna ports satisfy coherence, the network device indicates the co-phasing coefficient via the third indication information, thereby obtaining a relatively good antenna gain.

Optionally, the network device may determine the co-phasing coefficient according to CSI.

In the case where both the first TRI and the second TRI are less than or equal to 2, the co-phasing coefficient may be a first co-phasing coefficient. The first TRI is the same as the second TRI, and the total number of channel layers is the first TRI or the second TRI. Assuming that the first precoding matrix is represented as $B_1$, the second precoding matrix is represented as $B_2$, the uplink precoding matrix corresponding to 8 antenna ports is represented as $W$, and the first co-phasing coefficient is represented as $\varphi_1$, the uplink precoding matrix determined according to the first precoding matrix, the second precoding matrix, and the first co-phasing coefficient, may be expressed as:

$$W = \begin{bmatrix} B_1 \\ \varphi_1 \cdot B_2 \end{bmatrix}.$$

For example, assuming that both the first TRI and the second TRI are 2, the first precoding matrix indicator is TPMI 2, and the second precoding matrix indicator is TPMI 5, the uplink precoding matrix $W$ may be expressed as follows according to the precoding codebook illustrated in Table 1:

$$W=\frac{1}{2}\begin{bmatrix} 1 & 0 \\ 0 & 0 \\ 0 & 0 \\ 0 & 1 \\ 0 & 0 \\ 0 & 0 \\ \varphi_1 & 0 \\ 0 & \varphi_1 \end{bmatrix}.$$

In the case where both the first TRI and the second TRI are less than or equal to 2, the co-phasing coefficient may include a second co-phasing coefficient. The first TRI is the same as the second TRI, and the total number of channel layers is the first TRI or the second TRI. Assuming that the first precoding matrix is represented as $B_1$, the second precoding matrix is represented as $B_2$, the uplink precoding matrix corresponding to 8 antenna ports is represented as $W$, and the second co-phasing coefficient is represented as $\varphi_2$, the uplink precoding matrix determined according to the first precoding matrix, the second precoding matrix, and the first co-phasing coefficient, may be expressed as:

$$W = \begin{bmatrix} B_2 \\ \varphi_2 \cdot B_1 \end{bmatrix}.$$

For example, assuming that both the first TRI and the second TRI are 2, the first precoding matrix indicator is TPMI 2, and the second precoding matrix indicator is TPMI 5, the uplink precoding matrix $W$ may be expressed as follows according to the precoding codebook illustrated in Table 1:

$$W = \frac{1}{2}\begin{bmatrix} 0 & 0 \\ 0 & 0 \\ 1 & 0 \\ 0 & 1 \\ \varphi_2 & 0 \\ 0 & 0 \\ 0 & 0 \\ 0 & \varphi_2 \end{bmatrix}.$$

As may be seen, considering the coherence and phase difference between the first precoding matrix and the second precoding matrix, the antenna gain may be improved by adopting embodiments of the disclosure, and the uplink transmission rate may be effectively improved.

In the case where both the first TRI and the second TRI are greater than 2, the co-phasing coefficient may include a first co-phasing coefficient and a second co-phasing coefficient. The first TRI is the same as the second TRI, and the total number of channel layers is the sum of the first TRI and the second TRI. Assuming that the first precoding matrix is represented as $B_1$, the second precoding matrix is represented as $B_2$, the uplink precoding matrix corresponding to 8 antenna ports is represented as $W$, the first co-phasing coefficient is represented as $\varphi_1$, and the second co-phasing coefficient is represented as $\varphi_2$, the uplink precoding matrix determined according to the first precoding matrix, the second precoding matrix, the first co-phasing coefficient, and the second co-phasing coefficient, may be expressed as:

$$W = \begin{bmatrix} B_1 & B_1 \\ \varphi_1 \cdot B_2 & \varphi_2 \cdot B_2 \end{bmatrix},$$

or the uplink precoding matrix may be expressed as:

$$W = \begin{bmatrix} B_2 & B_2 \\ \varphi_2 \cdot B_1 & \varphi_1 \cdot B_1 \end{bmatrix}.$$

Exemplarily, for a CP-OFDM waveform, an uplink precoding codebook for 3-layer transmission using 4 antenna ports may be illustrated in Table 2. In Table 2, precoding matrices in the precoding codebook are ordered from left to right in increasing order of TPMIs. For example, in Table 2, matrices illustrated in the second row are uplink precoding matrices corresponding to TPMI=0, TPMI=1, TMPI=2, and TPMI=3, respectively. In Table 2, each matrix is a matrix with four rows and three columns, where the four rows represent 4 antenna ports and the three columns represent that a TRI is 3.

Table 2 uplink precoding codebook for 3-layer transmission using 4 antenna ports

| TPMI | uplink precoding matrix | | | |
|---|---|---|---|---|
| 0-3 | $\dfrac{1}{2}\begin{bmatrix} 1 & 0 & 0 \\ 0 & 1 & 0 \\ 0 & 0 & 1 \\ 0 & 0 & 0 \end{bmatrix}$ | $\dfrac{1}{2}\begin{bmatrix} 1 & 0 & 0 \\ 0 & 1 & 0 \\ 1 & 0 & 0 \\ 0 & 0 & 1 \end{bmatrix}$ | $\dfrac{1}{2}\begin{bmatrix} 1 & 0 & 0 \\ 0 & 1 & 0 \\ -1 & 0 & 0 \\ 0 & 0 & 1 \end{bmatrix}$ | $\dfrac{1}{2\sqrt{3}}\begin{bmatrix} 1 & 1 & 1 \\ 1 & -1 & 1 \\ 1 & 1 & -1 \\ 1 & -1 & -1 \end{bmatrix}$ |

(continued)

| TPMI | uplink precoding matrix | | | |
|---|---|---|---|---|
| 4-6 | $\frac{1}{2\sqrt{3}}\begin{bmatrix} 1 & 1 & 1 \\ 1 & -1 & 1 \\ j & j & -j \\ j & -j & -j \end{bmatrix}$ | $\frac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\frac{1}{2\sqrt{3}}\begin{bmatrix} 1 & 1 & 1 \\ -1 & 1 & -1 \\ j & j & -j \\ -j & j & j \end{bmatrix}$ | - |

For example, assuming that both the first TRI and the second TRI are 3, the first precoding matrix indicator is TPMI 1, and the second precoding matrix indicator is TPMI 2, the following first precoding matrix $B_1$ and second precoding matrix $B_2$ may be obtained according to Table 2:

$$B_1 = \frac{1}{2}\begin{bmatrix} 1 & 0 & 0 \\ 0 & 1 & 0 \\ 0 & 0 & 1 \\ 0 & 0 & 0 \end{bmatrix}, \quad B_2 = \frac{1}{2}\begin{bmatrix} 1 & 0 & 0 \\ 0 & 1 & 0 \\ 1 & 0 & 0 \\ 0 & 0 & 1 \end{bmatrix}.$$

Then the uplink precoding matrix $W$ may satisfy:

$$W = \frac{1}{2}\begin{bmatrix} 1 & 0 & 0 & 1 & 0 & 0 \\ 0 & 1 & 0 & 0 & 1 & 0 \\ 0 & 0 & 1 & 0 & 0 & 1 \\ 0 & 0 & 0 & 0 & 0 & 0 \\ \varphi_1 & 0 & 0 & \varphi_2 & 0 & 0 \\ 0 & \varphi_1 & 0 & 0 & \varphi_2 & 0 \\ \varphi_1 & 0 & 0 & \varphi_2 & 0 & 0 \\ 0 & 0 & \varphi_1 & 0 & 0 & \varphi_2 \end{bmatrix},$$

or the uplink precoding matrix $W$ may satisfy:

$$W = \frac{1}{2}\begin{bmatrix} 1 & 0 & 0 & 1 & 0 & 0 \\ 0 & 1 & 0 & 0 & 1 & 0 \\ 1 & 0 & 0 & 1 & 0 & 0 \\ 0 & 0 & 1 & 0 & 0 & 1 \\ \varphi_2 & 0 & 0 & \varphi_1 & 0 & 0 \\ 0 & \varphi_2 & 0 & 0 & \varphi_1 & 0 \\ 0 & 0 & \varphi_2 & 0 & 0 & \varphi_1 \\ 0 & 0 & 0 & 0 & 0 & 0 \end{bmatrix}.$$

It may be seen that in embodiments of the disclosure, an uplink precoding matrix that meets requirements of actual applications may be obtained in the case where a TRI corresponding to both the first precoding matrix and the second precoding matrix is greater than 2, thereby effectively improving the uplink transmission rate.

It may be noted that the above-mentioned manners are only used as examples and do not constitute limitation to embodiments of the disclosure.

At S204, the terminal device transmits uplink data according to the uplink precoding matrix. Accordingly, the network device receives the uplink data from the terminal device.

During uplink transmission, the terminal device not only determines the uplink precoding matrix by using the first precoding matrix and the second precoding matrix indicated by the network device, but also maps uplink data output through the uplink precoding matrix to corresponding antenna ports according to an SRS resource indication (SRI) from the network device, thereby facilitating diversity or multiplexing, and thus improving the uplink transmission rate.

It is assumed that two transport blocks (TBs), i.e., TB1 and TB2, need to be transmitted on uplink. The above two TBs are subject to codeword (CW) mapping to obtain CW1 and CW2. After the above two CWs are independently channel coded, scrambled, and modulated, the two CWs are mapped to different layers. Data of each layer is subject to discrete Fourier transform (DFT) and then precoded in frequency domain according to the uplink precoding matrix. The precoded data is allocated, through using resource mapping, to a corresponding resource block(s) (RB) or subcarrier(s), and then is subject to inverse discrete Fourier transform (IDFT) and transmitted to the network device through multiple antennas.

As may be seen, in the method described above, the uplink precoding matrix corresponding to 8 antenna ports is obtained, so that uplink data transmission using 8 antenna ports is supported on uplink, and the uplink transmission rate is effectively improved.

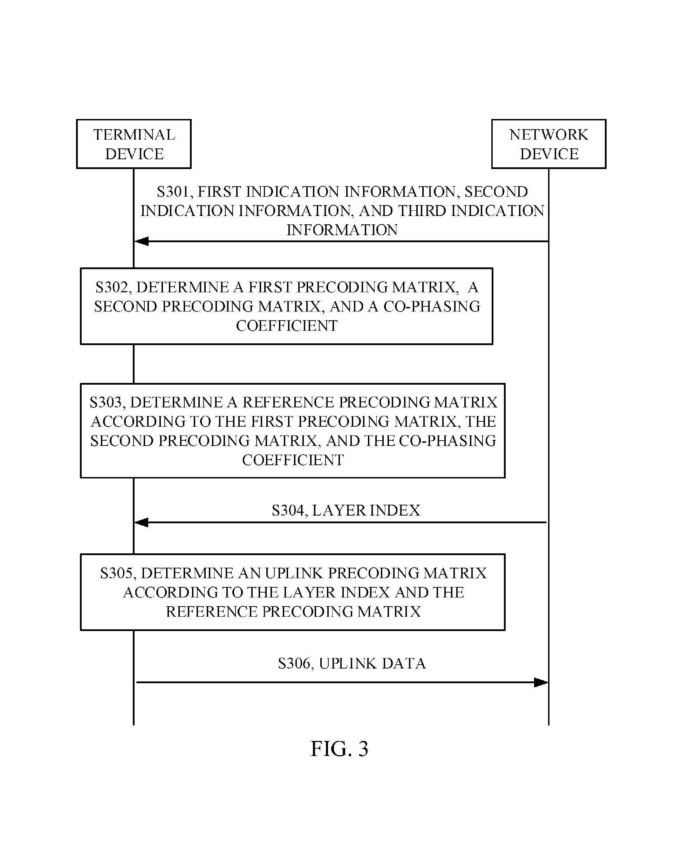

Refer to FIG. 3, which is another schematic flow chart illustrating a method for uplink precoding matrix determination provided in embodiments of the disclosure. The method as illustrated in FIG. 3 is applicable to a communication system as illustrated in FIG. 1. The method includes, but is not limited to, the following.

At S301, a network device transmits to a terminal device first indication information, second indication information, and third indication information. Accordingly, the terminal device receives the first indication information, the second indication information, and the third indication information from the network device.

At S302, the terminal device determines a first precoding matrix according to a first TRI and a first precoding matrix indicator, determines a second precoding matrix according to a second TRI and a second precoding matrix indicator, and determines a co-phasing coefficient between the first precoding matrix and the second precoding matrix according to the third indication information. Both the first precoding matrix and the second precoding matrix correspond to 4 antenna ports.

For implementation processes of the operations at S301 and S302, reference may be made to the corresponding illustration of the operations at S201 and S202 in FIG. 2, which will not be repeated herein.

At S303, the terminal device determines a reference precoding matrix according to the first precoding matrix, the second precoding matrix, and the co-phasing coefficient.

The co-phasing coefficient includes a first co-phasing coefficient and a second co-phasing coefficient. Assuming that the first precoding matrix is represented as $B_1$, the second precoding matrix is represented as $B_2$, the reference precoding matrix corresponding to 8 antenna ports is represented as $W_{REF}$, the first co-phasing coefficient is represented as $\varphi_1$, and the second co-phasing coefficient is represented as $\varphi_2$, the reference precoding matrix determined according to the first precoding matrix, the second precoding matrix, the first co-phasing coefficient, and the second co-phasing coefficient, may be expressed as:

$$W_{REF} = \begin{bmatrix} B_1 & B_1 \\ \varphi_1 \cdot B_2 & \varphi_2 \cdot B_2 \end{bmatrix},$$

or the reference precoding matrix may be expressed as:

$$W_{REF} = \begin{bmatrix} B_2 & B_2 \\ \varphi_2 \cdot B_1 & \varphi_1 \cdot B_1 \end{bmatrix}.$$

For example, assuming that both the first TRI and the second TRI are 3, the first precoding matrix indicator is TPMI 1, and the second precoding matrix indicator is TPMI 2, according to Table 2, the reference precoding matrix $W_{REF}$ may satisfy:

$$W_{REF} = \frac{1}{2} \begin{bmatrix} 1 & 0 & 0 & 1 & 0 & 0 \\ 0 & 1 & 0 & 0 & 1 & 0 \\ 0 & 0 & 1 & 0 & 0 & 1 \\ 0 & 0 & 0 & 0 & 0 & 0 \\ \varphi_1 & 0 & 0 & \varphi_2 & 0 & 0 \\ 0 & \varphi_1 & 0 & 0 & \varphi_2 & 0 \\ \varphi_1 & 0 & 0 & \varphi_2 & 0 & 0 \\ 0 & 0 & \varphi_1 & 0 & 0 & \varphi_2 \end{bmatrix},$$

or the reference precoding matrix $W_{REF}$ may satisfy:

$$W_{REF} = \frac{1}{2} \begin{bmatrix} 1 & 0 & 0 & 1 & 0 & 0 \\ 0 & 1 & 0 & 0 & 1 & 0 \\ 1 & 0 & 0 & 1 & 0 & 0 \\ 0 & 0 & 1 & 0 & 0 & 1 \\ \varphi_2 & 0 & 0 & \varphi_1 & 0 & 0 \\ 0 & \varphi_2 & 0 & 0 & \varphi_1 & 0 \\ 0 & 0 & \varphi_2 & 0 & 0 & \varphi_1 \\ 0 & 0 & 0 & 0 & 0 & 0 \end{bmatrix}.$$

At S304, the network device transmits a layer index to the terminal device. Accordingly, the terminal device receives the layer index from the network device.

The layer index may be determined via fourth indication information, or the layer index may be determined via the first indication information or the second indication information or the third indication information. The fourth indication information, the first indication information, the second indication information, and the third indication information may be carried in the same DCI or in different DCI. In the case where the fourth indication information, the first indication information, the second indication information, and the third indication information are carried in different DCI, there is no restriction on order in which the four indication information are transmitted.

In the case where both the first TRI and the second TRI are greater than 2, the network device may require the terminal device to transmit uplink data using an uplink precoding matrix with an odd TRI (e.g., 5 or 7). In this case, the network device may enable, by means of the layer index indicating a certain column in the reference precoding matrix, the terminal device to adjust the reference precoding matrix according to the layer index, so that the terminal device obtains the uplink precoding matrix.

At S305, the terminal device determines the uplink precoding matrix according to the layer index and the reference precoding matrix.

In a precoding matrix, the number of columns equals a TRI, and the number of rows equals the number of antenna ports. Exemplarily, assuming that both the first TRI and the second TRI are 3, the first precoding matrix indicator is TPMI 1, and the second precoding matrix indicator is TPMI 2, according to Table 2, a TRI corresponding to the reference precoding matrix $W_{REF}$ is 6, and the reference precoding matrix $W_{REF}$ may satisfy:

$$W_{REF} = \frac{1}{2}\begin{bmatrix} 1 & 0 & 0 & 1 & 0 & 0 \\ 0 & 1 & 0 & 0 & 1 & 0 \\ 0 & 0 & 1 & 0 & 0 & 1 \\ 0 & 0 & 0 & 0 & 0 & 0 \\ \varphi_1 & 0 & 0 & \varphi_2 & 0 & 0 \\ 0 & \varphi_1 & 0 & 0 & \varphi_2 & 0 \\ \varphi_1 & 0 & 0 & \varphi_2 & 0 & 0 \\ 0 & 0 & \varphi_1 & 0 & 0 & \varphi_2 \end{bmatrix}.$$

In the case where the layer index indicates the third column in the reference precoding matrix, a TRI corresponding to the uplink precoding matrix is 5 after the reference precoding matrix is modified according to the layer index, and the uplink precoding matrix may be expressed as:

$$W = \frac{1}{2}\begin{bmatrix} 1 & 0 & 1 & 0 & 0 \\ 0 & 1 & 0 & 1 & 0 \\ 0 & 0 & 0 & 0 & 1 \\ 0 & 0 & 0 & 0 & 0 \\ \varphi_1 & 0 & \varphi_2 & 0 & 0 \\ 0 & \varphi_1 & 0 & \varphi_2 & 0 \\ \varphi_1 & 0 & \varphi_2 & 0 & 0 \\ 0 & 0 & 0 & 0 & \varphi_2 \end{bmatrix}.$$

In the case where the layer index indicates the sixth column in the reference precoding matrix, a TRI corresponding to the uplink precoding matrix is 5 after the reference precoding matrix is modified according to the layer index, and the uplink precoding matrix may be expressed as:

$$W = \frac{1}{2}\begin{bmatrix} 1 & 0 & 0 & 1 & 0 \\ 0 & 1 & 0 & 0 & 1 \\ 0 & 0 & 1 & 0 & 0 \\ 0 & 0 & 0 & 0 & 0 \\ \varphi_1 & 0 & 0 & \varphi_2 & 0 \\ 0 & \varphi_1 & 0 & 0 & \varphi_2 \\ \varphi_1 & 0 & 0 & \varphi_2 & 0 \\ 0 & 0 & \varphi_1 & 0 & 0 \end{bmatrix}.$$

At S306, the terminal device transmits uplink data according to the uplink precoding matrix. Accordingly, the network device receives the uplink data from the terminal device.

For an implementation process of the operation at S306, reference may be made to the specific illustration of the operations at S204 in FIG. 2, which will not be repeated herein.

As may be seen, by adopting embodiments of the disclosure, the uplink precoding matrix corresponding to 8 antenna ports is obtained in the case of different TRIs, so that uplink transmission using 8 antenna ports is realized on uplink, and the uplink transmission rate is effectively improved.

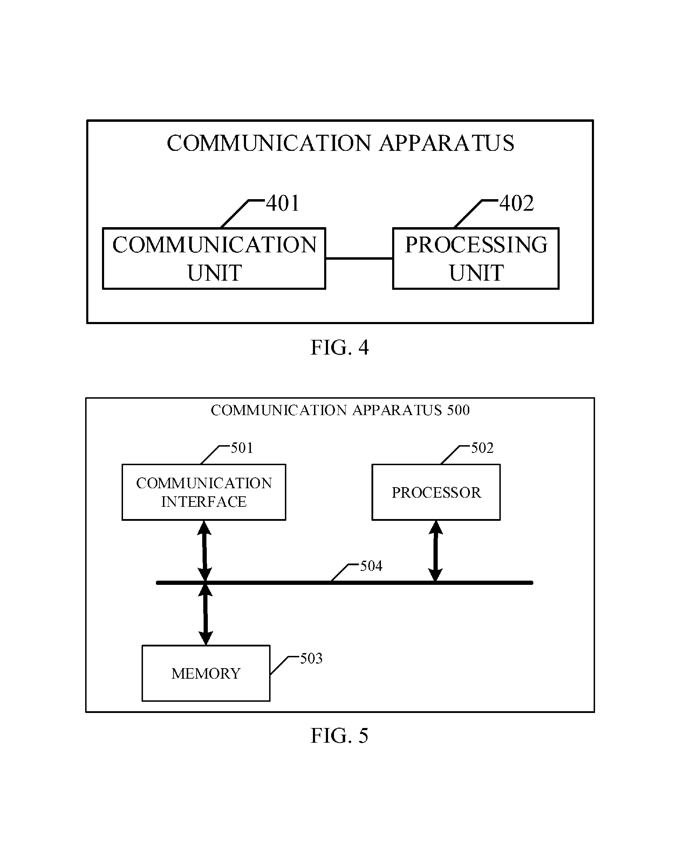

Refer to FIG. 4, which is a schematic structural diagram illustrating a communication apparatus provided in embodiments of the disclosure. The communication apparatus may be a terminal device or an apparatus matching the terminal device. As illustrated in FIG. 4, the communication apparatus includes a communication unit 401 and a processing unit 402. The communication unit 401 is configured to receive first indication information and second indication information. The first indication information is used to determine a first TRI and a first precoding matrix indicator, and the second indication information is used to determine a second TRI and a second precoding matrix indicator. The processing unit 402 is configured to: determine a first precoding matrix according to the first TRI and the first precoding matrix indicator, and determine a second precoding matrix according to the second TRI and the second precoding matrix indicator, where both the first precoding matrix and the second precoding matrix correspond to 4 antenna ports; and determine an uplink precoding matrix according to the first precoding matrix and the second precoding matrix, where the uplink precoding matrix corresponds to 8 antenna ports. The communication unit 401 is further configured to transmit uplink data according to the uplink precoding matrix.

In an implementation, both the first TRI and the second TRI determined by the communication unit 401 are the same, and the uplink precoding matrix is a block diagonal matrix formed according to the first precoding matrix and the second precoding matrix.

In an implementation, the communication unit 401 is further configured to receive third indication information, where the third indication information is used to determine a co-phasing coefficient between the first precoding matrix and the second precoding matrix. The processing unit 402 is specifically configured to determine the uplink precoding matrix according to the first precoding matrix, the second precoding matrix, and the co-phasing coefficient.

In an implementation, the co-phasing coefficient is a first co-phasing coefficient, and the processing unit 402 is specifically configured to determine the uplink precoding matrix according to the first precoding matrix, the second precoding matrix, and the first co-phasing coefficient, in the case where the first TRI is less than or equal to 2 and the second TRI is less than or equal to 2.

In another implementation, the co-phasing coefficient includes a first co-phasing coefficient and a second co-phasing coefficient, and the processing unit 402 is specifically configured to: determine a reference precoding matrix according to the first precoding matrix, the second precoding matrix, the first co-phasing coefficient, and the second co-phasing coefficient, in the case where the first TRI is greater than 2 and the second TRI is greater than 2; and determine the uplink precoding matrix according to the reference precoding matrix.

In an implementation, the communication unit 401 is further configured to receive fourth indication information, where the fourth indication information is used to determine a layer index. The processing unit 402 is specifically configured to determine the uplink precoding matrix according to the reference precoding matrix and the layer index.

According to embodiments of the disclosure, various operations involved in the method for uplink precoding matrix determination illustrated in FIG. 2 and FIG. 3 may be performed by each unit in the communication apparatus illustrated in FIG. 4. For example, the operations at S201 and S204 in FIG. 2 may be performed by the communication unit 401 in the communication apparatus illustrated in FIG. 4; the operations at S202 and S203 in FIG. 2 may be performed by the processing unit 402 in the communication apparatus illustrated in FIG. 4; the operations at S301, S304, and S306 in FIG. 3 may be performed by the communication unit 401 in the communication apparatus illustrated in FIG. 4; and the operations at S302, S303, and S305 in FIG. 3 may be performed by the processing unit 402 in the communication apparatus illustrated in FIG. 4.

According to another embodiment of the disclosure, the communication apparatus as illustrated in FIG. 4 may be constructed and the method for uplink precoding matrix determination in embodiments of the disclosure may be implemented by running computer programs (including program codes) capable of performing the operations involved in the methods illustrated in FIG. 2 and FIG. 3 on a general-purpose computing device such as a computer, which includes a processing element and a storage element such as a central processing unit (CPU), a random access memory (RAM), a read-only memory (ROM), etc. The computer programs may be recorded on, for example, a computer-readable storage medium, loaded into the communication apparatus through the computer-readable storage medium, and run therein.

A chip is provided in embodiments of the disclosure. The chip may be configured to perform the related operations performed by the terminal device in the foregoing method embodiments.

The chip is configured to: receive first indication information and second indication information, where the first indication information is used to determine a first TRI and a first precoding matrix indicator, and the second indication information is used to determine a second TRI and a second precoding matrix indicator; determine a first precoding matrix according to the first TRI and the first precoding matrix indicator, and determine a second precoding matrix according to the second TRI and the second precoding matrix indicator, where both the first precoding matrix and the second precoding matrix correspond to 4 antenna ports; determine an uplink precoding matrix according to the first precoding matrix and the second precoding matrix, where the uplink precoding matrix corresponds to 8 antenna ports; and transmit uplink data according to the uplink precoding matrix.

Refer to FIG. 5, which illustrates a communication apparatus 500 provided in embodiments of the disclosure. The communication apparatus 500 is configured to implement the functions of the above terminal device. The communication apparatus 500 may be a terminal device or an apparatus configured for the terminal device. The apparatus configured for the terminal device may be a chip system or a chip in the terminal device. The chip system may consist of chips, or may include chips and other discretes. Optionally, the communication apparatus 500 is configured to implement the functions of the above network device. The apparatus may be a network device or an apparatus configured for the network device. The apparatus configured for the network device may be a chip system or a chip in the network device.

The communication apparatus 500 includes at least one processor 502 configured to implement the function of constructing an uplink precoding matrix of the terminal device in the method provided in embodiments of the disclosure. The communication apparatus may further include a communication interface 501 configured to implement the transceiving operations performed by the terminal device in the method provided in embodiments of the disclosure. In embodiments of the disclosure, the communication interface may be a transceiver, a circuit, a bus, a module, or other type of communication interface and is configured to perform communication with other devices through transmission media. For example, an apparatus in communication apparatus 500 may communicate with other devices via the communication interface 501. The processor 502 transmits and receives data via the communication interface 501 and is configured to implement the methods described in embodiments in FIG. 2 and FIG. 3.

The communication apparatus 500 may further include at least one memory 503 configured to store program instructions and/or data. The memory 503 and the processor 502 are coupled. The coupling in embodiments of the disclosure refers to indirect coupling or communication connection between apparatuses, units, or modules, may be electrical, mechanical, or in other forms, and is used for information exchange between apparatuses, units, or modules. The processor 502 may operate in conjunction with the memory 503. The processor 502 may execute program instructions stored in the memory 503. At least one of the at least one memory may be in the processor.

After the communication apparatus 500 is on, the processor 502 can read the software programs in the memory 503, interpret and execute the instructions of the software programs, and process the data of the software programs. When data needs to be transmitted wirelessly, the processor 502 performs baseband processing on data to-be-transmitted and outputs a baseband signal to a radio frequency (RF) circuit. The RF circuit performs baseband processing on the baseband signal and transmits an RF signal out in the form of electromagnetic waves through an antenna. When data is configured to be transmitted to the communication apparatus 500, the RF circuit receives the RF signal through the antenna, converts the RF signal into the baseband signal, and outputs the baseband signal to the processor 502. The processor 502 converts the baseband signal into data and processes the data.

The specific connection medium between the communication interface 501, the processor 502, and the memory 503 is not limited in embodiments of the disclosure. In embodiments of the disclosure, the memory 503, the processor 502, and the communication interface 501 are connected via a bus 504 in FIG. 5. The bus is expressed by a thick line in FIG. 5. The connection manner between other components is only for illustrative purposes and is not limited thereto. The bus may be classified into an address bus, a data bus, a control bus, etc. For ease of representation, only one thick line is used in FIG. 5, but it does not indicate that there is only one bus or one type of bus.

When the communication apparatus 500 is specifically used in a terminal device, for example, the communication device 500 is specifically a chip or a chip system, the communication interface 501 may output or receive a baseband signal. When the communication apparatus 500 is specifically a terminal device, the communication interface 501 may output or receive an RF signal. In embodiments of the disclosure, the processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, operations, and logic blocks disclosed in embodiments may be implemented or executed. The general-purpose processor may be a microprocessor or any conventional processor or the like. The operations of the method disclosed in embodiments may be directly implemented as a hardware processor, or may be performed by hardware and software modules in the processor.

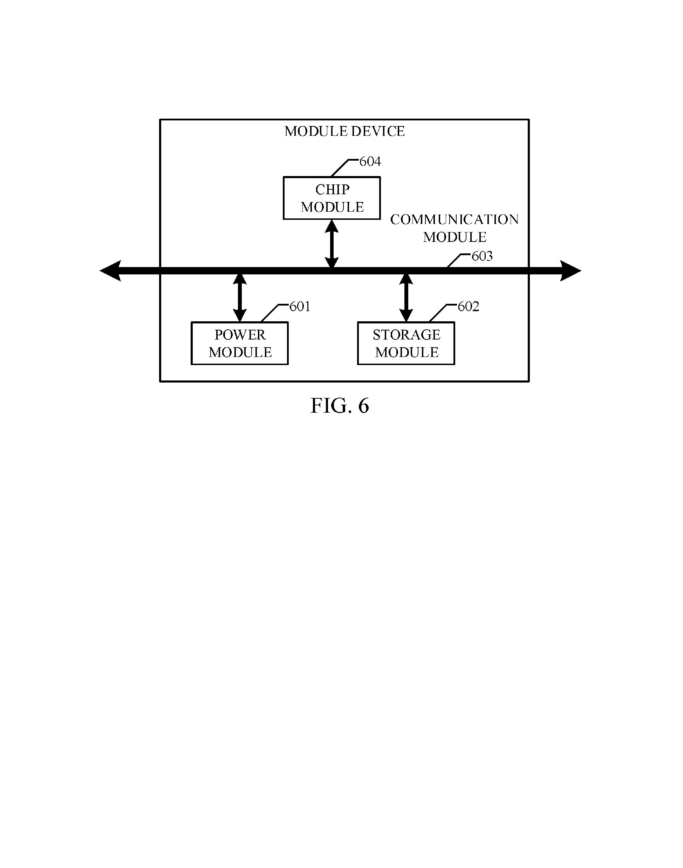

Refer to FIG. 6, which is a schematic structural diagram illustrating a module device provided in embodiments of the disclosure. As illustrated in FIG. 6, the module device includes a power module 601, a storage module 602, a communication module 603, and a chip module 604. The power module 601 is configured to power the module device. The storage module 602 is configured to store data and instructions. The communication module 603 is configured to perform internal communication in the module device or configured to perform communication between the module device and an external device. The chip module 604 is configured to: receive first indication information and second indication information via the communication module 603, where the first indication information is used to determine a first TRI and a first precoding matrix indicator, and the second indication information is used to determine a second TRI and a second precoding matrix indicator; determine a first precoding matrix according to the first TRI and the first precoding matrix indicator, and determine a second precoding matrix according to the second TRI and the second precoding matrix indicator, where both the first precoding matrix and the second precoding matrix correspond to 4 antenna ports; determine an uplink precoding matrix according to the first precoding matrix and the second precoding matrix, where the uplink precoding matrix corresponds to 8 antenna ports; and transmit uplink data via the communication module 603 according to the uplink precoding matrix.

In an implementation, both the first indication information and the second indication information received via the communication module 603 are the same, and both the first TRI and the second TRI determined by the chip module 604 are the same. The uplink precoding matrix is a block diagonal matrix formed according to the first precoding matrix and the second precoding matrix.

In an implementation, the communication module 603 is further configured to receive third indication information, where the third indication information is used to determine a co-phasing coefficient between the first precoding matrix and the second precoding matrix. The chip module 604 is further configured to determine the uplink precoding matrix according to the first precoding matrix, the second precoding matrix, and the co-phasing coefficient.

In an implementation, the co-phasing coefficient is a first co-phasing coefficient, and the chip module 604 is further configured to determine the uplink precoding matrix according to the first precoding matrix, the second precoding matrix, and the first co-phasing coefficient, in the case where the first TRI is less than or equal to 2 and the second TRI is less than or equal to 2.

In another implementation, the co-phasing coefficient includes a first co-phasing coefficient and a second co-phasing coefficient, and the chip module 604 is further configured to: determine a reference precoding matrix according to the first precoding matrix, the second precoding matrix, the first co-phasing coefficient, and the second co-phasing coefficient, in the case where the first TRI is greater than 2 and the second TRI is greater than 2; and determine the uplink precoding matrix according to the reference precoding matrix.

In an implementation, the communication module 603 is further configured to receive fourth indication information, where the fourth indication information is used to determine a layer index. The chip module 604 is further configured to determine the uplink precoding matrix according to the reference precoding matrix and the layer index.

For various apparatuses and products applied to or integrated into the chip module, each module therein may be implemented using hardware such as circuits. Different modules may be located in the same component (such as chips, circuit modules, etc.) or in different components of the chip module, or at least some modules may be implemented using software programs that run on the processor integrated into the chip module. The rest of (if any) modules may be implemented using hardware such as circuits.

A computer-readable storage medium is further provided in embodiments of the disclosure. The computer-readable storage medium is configured to store one or more instructions which are suitable for a processor to load and perform the method provided in the above method embodiments.

A computer program product is further provided in embodiments of the disclosure. The computer program product includes computer programs or instructions which, when running on a computer, enable the computer to perform the method provided in the above method embodiments.

Each module/unit in the apparatuses or products described in the foregoing embodiments may be a software module/unit, a hardware module/unit, or may be partially a software module/unit and partially a hardware module/unit. For example, for each apparatus and product applied to or integrated into the chip, each module/unit included may be implemented by hardware such as circuits, or at least part of modules/units may be implemented by software programs that run on a processor integrated into the chip, and the rest of (if any) modules/units may be implemented by hardware such as circuits. For each apparatus and product applied to or integrated into the chip module, each module/unit included may be implemented by hardware such as circuits, and different modules/units may be located in the same component (such as a chip, a circuit module, etc.) or different components of the chip module. Alternatively, at least part of modules/units may be implemented by software programs that run on the processor integrated into the chip module, and the rest of (if any) modules/units may be implemented by hardware such as circuits. For each apparatus and product applied to or integrated into the terminal device, each module/unit included may be implemented by hardware such as circuits, and different modules/units may be located in the same component (e.g., a chip, a circuit module, etc.) or different components in the terminal device, or at least part of modules/units may be implemented by software programs that run on the processor integrated into the terminal device, and the rest of (if any) modules/units may be implemented by hardware such as circuits.

It is to be noted that for the sake of simplicity, the foregoing method embodiments are described as a series of action combinations. However, it will be appreciated by those skilled in the art that the disclosure is not limited by the sequence of actions described. According to the disclosure, some steps may be performed in other orders or simultaneously. Besides, it will be appreciated by those skilled in the art that the embodiments described in the specification are preferred embodiments, and the actions and modules involved are not necessarily essential to the disclosure.

The operations of the methods of the embodiments of the disclosure may be adjusted, combined, and deleted according to actual needs.

The modules of the apparatus of the embodiments of the disclosure may be combined, divided, and deleted according to actual needs.

Those of ordinary skill in this art may understand that all or part of the operations in various methods of the above embodiments may be completed by relevant hardware instructed through programs. The programs may be stored in a computer-readable storage medium, which may include a flash drive, an ROM, an RAM, a magnetic disk, an optical disk, etc.

The above embodiments are only some embodiments of the disclosure, and are only part of embodiments of the disclosure, which cannot be used to limit the scope of the claims of the disclosure.

**Claims**

1.  A method for uplink precoding matrix determination, comprising:

    receiving first indication information and second indication information, wherein the first indication information is used to determine a first transmission rank indicator (TRI) and a first precoding matrix indicator, and the second indication information is used to determine a second TRI and a second precoding matrix indicator;
    determining a first precoding matrix according to the first TRI and the first precoding matrix indicator, and determining a second precoding matrix according to the second TRI and the second precoding matrix indicator, wherein both the first precoding matrix and the second precoding matrix correspond to 4 antenna ports;
    determining an uplink precoding matrix according to the first precoding matrix and the second precoding matrix, wherein the uplink precoding matrix corresponds to 8 antenna ports; and
    transmitting uplink data according to the uplink precoding matrix.

2.  The method of claim 1, wherein the first TRI is the same as the second TRI, and the uplink precoding matrix is a block diagonal matrix formed according to the first precoding matrix and the second precoding matrix.

3.  The method of claim 2, wherein both the first TRI and the second TRI are 2.

4.  The method of claim 1, further comprising:

    receiving third indication information, wherein the third indication information is used to determine a co-phasing coefficient between the first precoding matrix and the second precoding matrix;
    wherein determining the uplink precoding matrix according to the first precoding matrix and the second precoding matrix comprises:
    determining the uplink precoding matrix according to the first precoding matrix, the second precoding matrix, and the co-phasing coefficient.

5.  The method of claim 3, wherein the co-phasing coefficient is related to channel state information (CSI).

6.  The method of claim 4 or 5, wherein the co-phasing coefficient is a first co-phasing coefficient, and determining the uplink precoding matrix according to the first precoding matrix, the second precoding matrix, and the co-phasing coefficient, comprises:
    determining the uplink precoding matrix according to the first precoding matrix, the second precoding matrix, and the first co-phasing coefficient, in the case where the first TRI is less than or equal to 2 and the second TRI is less than or equal to 2.

7.  The method of claim 6, wherein determining the uplink precoding matrix according to the first precoding matrix, the second precoding matrix, and the first co-phasing coefficient, comprises:

    obtaining a multiplication matrix by multiplying the first co-phasing coefficient with the second precoding matrix; and
    determining the uplink precoding matrix according to the first precoding matrix and the multiplication matrix;
    wherein the uplink precoding matrix is represented as $W$, and $W$ satisfies:

    $$W = \begin{bmatrix} B_1 \\ \varphi_1 \cdot B_2 \end{bmatrix},$$

    wherein $B_1$ represents the first preceding matrix, $B_2$ represents the second preceding matrix, and $\varphi_1$ represents the first co-phasing coefficient.

8.  The method of claim 4 or 5, wherein the co-phasing coefficient comprises a second co-phasing coefficient, and determining the uplink precoding matrix according to the first precoding matrix, the second precoding matrix, and the co-phasing coefficient, comprises:
    determining the uplink precoding matrix according to the first precoding matrix, the second precoding matrix, and the second co-phasing coefficient, in the case where the first TRI is less than or equal to 2 and the second TRI is less than or equal to 2.

9. The method of claim 8, wherein determining the uplink precoding matrix according to the first precoding matrix, the second precoding matrix, and the second co-phasing coefficient, comprises:

obtaining a multiplication matrix by multiplying the second co-phasing coefficient with the first precoding matrix; and
determining the uplink precoding matrix according to the second precoding matrix and the multiplication matrix; wherein the uplink precoding matrix is represented as *W,* and *W* satisfies:

$$W = \begin{bmatrix} B_2 \\ \varphi_2 \cdot B_1 \end{bmatrix},$$

wherein $B_1$ represents the first precoding matrix, $B_2$ represents the second precoding matrix, and $\varphi_2$ represents the second co-phasing coefficient.

10. The method of claim 4 or 5, wherein the co-phasing coefficient comprises a first co-phasing coefficient and a second co-phasing coefficient, and determining the uplink precoding matrix according to the first precoding matrix, the second precoding matrix, and the co-phasing coefficient, comprises:
determining the uplink precoding matrix according to the first precoding matrix, the second precoding matrix, the first co-phasing coefficient, and the second co-phasing coefficient, in the case where the first TRI is greater than 2, the second TRI is greater than 2, the first TRI is the same as the second TRI, and a sum of the first TRI and the second TRI is total number of channel layers.

11. The method of claim 10, wherein determining the uplink precoding matrix according to the first precoding matrix, the second precoding matrix, the first co-phasing coefficient, and the second co-phasing coefficient, comprises:

obtaining a first multiplication matrix according to the second precoding matrix and the first co-phasing coefficient;
obtaining a second multiplication matrix according to the second precoding matrix and the second co-phasing coefficient; and
determining the uplink precoding matrix according to the first multiplication matrix, the second multiplication matrix, and the first precoding matrix;
wherein the uplink precoding matrix is represented as *W,* and *W* satisfies:

$$W = \begin{bmatrix} B_1 & B_1 \\ \varphi_1 \cdot B_2 & \varphi_2 \cdot B_2 \end{bmatrix},$$

wherein $B_1$ represents the first precoding matrix, $B_2$ represents the second precoding matrix, $\varphi_1$ represents the first co-phasing coefficient, and $\varphi_2$ represents the second co-phasing coefficient.

12. The method of claim 10, wherein determining the uplink precoding matrix according to the first precoding matrix, the second precoding matrix, the first co-phasing coefficient, and the second co-phasing coefficient, comprises:

obtaining a first multiplication matrix according to the first precoding matrix and the first co-phasing coefficient;
obtaining a second multiplication matrix according to the first precoding matrix and the second co-phasing coefficient; and
determining the uplink precoding matrix according to the first multiplication matrix, the second multiplication matrix, and the second precoding matrix;
wherein the uplink precoding matrix is represented as *W,* and *W* satisfies:

$$W = \begin{bmatrix} B_2 & B_2 \\ \varphi_2 \cdot B_1 & \varphi_1 \cdot B_1 \end{bmatrix},$$

wherein $B_1$ represents the first precoding matrix, $B_2$ represents the second precoding matrix, $\varphi_1$ represents the first co-phasing coefficient, and $\varphi_2$ represents the second co-phasing coefficient.

**13.** The method of claim 4 or 5, wherein the co-phasing coefficient comprises a first co-phasing coefficient and a second co-phasing coefficient, and determining the uplink precoding matrix according to the first precoding matrix, the second precoding matrix, and the co-phasing coefficient, comprises:

determining a reference precoding matrix according to the first precoding matrix, the second precoding matrix, the first co-phasing coefficient, and the second co-phasing coefficient, in the case where the first TRI is greater than 2 and the second TRI is greater than 2; and
determining the uplink precoding matrix according to the reference precoding matrix.

**14.** The method of claim 13, wherein the reference precoding matrix is represented as $W_{REF}$, and $W_{REF}$ satisfies:

$$W_{REF} = \begin{bmatrix} B_1 & B_1 \\ \varphi_1 \cdot B_2 & \varphi_2 \cdot B_2 \end{bmatrix} \text{ or } W_{REF} = \begin{bmatrix} B_2 & B_2 \\ \varphi_2 \cdot B_1 & \varphi_1 \cdot B_1 \end{bmatrix},$$

wherein $B_1$ represents the first precoding matrix, $B_2$ represents the second precoding matrix, $\varphi_1$ represents the first co-phasing coefficient, and $\varphi_2$ represents the second co-phasing coefficient.

**15.** The method of claim 13, further comprising:

receiving fourth indication information, wherein the fourth indication information is used to determine a layer index;
wherein determining the uplink precoding matrix according to the reference precoding matrix comprises:
determining the uplink precoding matrix according to the reference precoding matrix and the layer index.

**16.** The method of claim 1, wherein the first indication information is used to determine the first TRI and the first precoding matrix indicator, and the first indication information and the second indication information are used together to determine the second TRI and the second precoding matrix indicator.

**17.** A communication apparatus, comprising:

a communication unit configured to receive first indication information and second indication information, wherein the first indication information is used to determine a first transmission rank indicator (TRI) and a first precoding matrix indicator, and the second indication information is used to determine a second TRI and a second precoding matrix indicator;
a processing unit configured to: determine a first precoding matrix according to the first TRI and the first precoding matrix indicator, and determine a second precoding matrix according to the second TRI and the second precoding matrix indicator, wherein both the first precoding matrix and the second precoding matrix correspond to 4 antenna ports; and determine an uplink precoding matrix according to the first precoding matrix and the second precoding matrix, wherein the uplink precoding matrix corresponds to 8 antenna ports; and
the communication unit further configured to transmit uplink data according to the uplink precoding matrix.

**18.** A chip, configured to: receive first indication information and second indication information, wherein the first indication information is used to determine a first transmission rank indicator (TRI) and a first precoding matrix indicator, and the second indication information is used to determine a second TRI and a second precoding matrix indicator; determine a first precoding matrix according to the first TRI and the first precoding matrix indicator, and determine a second precoding matrix according to the second TRI and the second precoding matrix indicator, wherein both the first precoding matrix and the second precoding matrix correspond to 4 antenna ports; determine an uplink precoding matrix according to the first precoding matrix and the second precoding matrix, wherein the uplink precoding matrix corresponds to 8 antenna ports; and transmit uplink data according to the uplink precoding matrix.

**19.** A module device, comprising:

a power module configured to power the module device;
a storage module configured to store data and instructions;
a communication module configured to perform internal communication in the module device or configured to perform communication between the module device and an external device; and

a chip module configured to: receive first indication information and second indication information via the communication module, wherein the first indication information is used to determine a first transmission rank indicator (TRI) and a first precoding matrix indicator, and the second indication information is used to determine a second TRI and a second precoding matrix indicator; determine a first precoding matrix according to the first TRI and the first precoding matrix indicator, and determine a second precoding matrix according to the second TRI and the second precoding matrix indicator, wherein both the first precoding matrix and the second precoding matrix correspond to 4 antenna ports; determine an uplink precoding matrix according to the first precoding matrix and the second precoding matrix, wherein the uplink precoding matrix corresponds to 8 antenna ports; and transmit uplink data via the communication module according to the uplink precoding matrix.

20. A computer-readable storage medium configured to store computer programs which, when running on a communication apparatus, enable the communication apparatus to perform the method of any one of claims 1 to 16.

FIG. 1

TERMINAL
DEVICE

NETWORK
DEVICE

S201, FIRST INDICATION INFORMATION AND
SECOND INDICATION INFORMATION

S202, DETERMINE A FIRST PRECODING MATRIX
AND A SECOND PRECODING MATRIX

S203, DETERMINE AN UPLINK PRECODING
MATRIX ACCORDING TO THE FIRST PRECODING
MATRIX AND THE SECOND PRECODING MATRIX

S204, UPLINK DATA

FIG. 2

```
TERMINAL
DEVICE                                              NETWORK
                                                    DEVICE

       S301, FIRST INDICATION INFORMATION, SECOND
       INDICATION INFORMATION, AND THIRD INDICATION
                      INFORMATION

  S302, DETERMINE A FIRST PRECODING MATRIX,  A
   SECOND PRECODING MATRIX, AND A CO-PHASING
                  COEFFICIENT

  S303, DETERMINE A REFERENCE PRECODING MATRIX
  ACCORDING TO THE FIRST PRECODING MATRIX, THE
  SECOND PRECODING MATRIX, AND THE CO-PHASING
                  COEFFICIENT

                 S304, LAYER INDEX

  S305, DETERMINE AN UPLINK PRECODING MATRIX
    ACCORDING TO THE LAYER INDEX AND THE
         REFERENCE PRECODING MATRIX

                 S306, UPLINK DATA
```

FIG. 3

COMMUNICATION APPARATUS

COMMUNICATION UNIT — 401

PROCESSING UNIT — 402

FIG. 4

COMMUNICATION APPARATUS 500

COMMUNICATION INTERFACE — 501

PROCESSOR — 502

— 504

MEMORY — 503

FIG. 5

MODULE DEVICE

604

CHIP
MODULE

COMMUNICATION
MODULE

603

601

POWER
MODULE

602

STORAGE
MODULE

FIG. 6

# EP 4 482 049 A1

## INTERNATIONAL SEARCH REPORT

| | International application No. |
|---|---|
| | **PCT/CN2023/075999** |

**A. CLASSIFICATION OF SUBJECT MATTER**

H04B7/0456(2017.01)i

According to International Patent Classification (IPC) or to both national classification and IPC

**B. FIELDS SEARCHED**

Minimum documentation searched (classification system followed by classification symbols)

IPC: H04B H04L H04W

Documentation searched other than minimum documentation to the extent that such documents are included in the fields searched

Electronic data base consulted during the international search (name of data base and, where practicable, search terms used)

CNTXT; CNKI; VEN; ENTXT; 3GPP: 预编码矩阵, 第二, 多, 单面板, 拼接, 多面板, 两级码本, 共相位系数, precoding matrix, second, multi, single, multiple, cross, panel codebook, two-stage codebook, co-phasing vector, TPMI

**C. DOCUMENTS CONSIDERED TO BE RELEVANT**

| Category* | Citation of document, with indication, where appropriate, of the relevant passages | Relevant to claim No. |
|---|---|---|
| X | CN 109150256 A (HUAWEI TECHNOLOGIES CO., LTD.) 04 January 2019 (2019-01-04) description, paragraphs 194-485, and figures 3-6 | 1-20 |
| X | Huawei et al. "R1-1708130 "Codebook based transmission for UL MIMO"" *3GPP tsg_ran\WG1_RL1*, No. TSGR1_89, 06 May 2017 (2017-05-06), text, sections 2 and 3 | 1-20 |
| A | CN 113938169 A (HUAWEI TECHNOLOGIES CO., LTD.) 14 January 2022 (2022-01-14) entire document | 1-20 |
| A | US 2021359733 A1 (TELEFONAKTIEBOLAGET LM ERICSSON (PUBL)) 18 November 2021 (2021-11-18) entire document | 1-20 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 June 2023** | **19 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 482 049 A1**

| Patent document cited in search report | | | Publication date (day/month/year) | Patent family member(s) | | | Publication date (day/month/year) |
|---|---|---|---|---|---|---|---|
| CN | 109150256 | A | 04 January 2019 | US | 2020119788 | A1 | 16 April 2020 |
| | | | | US | 11018738 | B2 | 25 May 2021 |
| | | | | EP | 3641149 | A1 | 22 April 2020 |
| | | | | EP | 3641149 | A4 | 27 May 2020 |
| CN | 113938169 | A | 14 January 2022 | | None | | |
| US | 2021359733 | A1 | 18 November 2021 | US | 11418240 | B2 | 16 August 2022 |
| | | | | US | 2022337296 | A1 | 20 October 2022 |
| | | | | RU | 2745419 | C1 | 25 March 2021 |
| | | | | JP | 2021503732 | A | 12 February 2021 |
| | | | | JP | 7076542 | B2 | 27 May 2022 |
| | | | | EP | 3761520 | A1 | 06 January 2021 |
| | | | | EP | 3761520 | B1 | 26 May 2021 |
| | | | | KR | 20210138173 | A | 18 November 2021 |
| | | | | KR | 102342173 | B1 | 21 December 2021 |
| | | | | CA | 3082555 | A1 | 23 May 2019 |
| | | | | CA | 3082555 | C | 14 March 2023 |
| | | | | WO | 2019096843 | A1 | 23 May 2019 |
| | | | | EP | 3913817 | A1 | 24 November 2021 |
| | | | | KR | 20200067873 | A | 12 June 2020 |
| | | | | KR | 102328352 | B1 | 17 November 2021 |
| | | | | US | 2023144128 | A1 | 11 May 2023 |
| | | | | EP | 3545626 | A1 | 02 October 2019 |
| | | | | EP | 3545626 | B1 | 23 September 2020 |
| | | | | ES | 2837420 | T3 | 30 June 2021 |
| | | | | MX | 2020004993 | A | 27 August 2020 |
| | | | | IL | 273968 | A | 31 May 2020 |
| | | | | BR | 112020008535 | A2 | 20 October 2020 |
| | | | | HUE | 052185 | T2 | 28 April 2021 |
| | | | | AU | 2018367102 | A1 | 02 July 2020 |
| | | | | AU | 2018367102 | B2 | 29 July 2021 |

Form PCT/ISA/210 (patent family annex) (July 2022)